# EUROPEAN PATENT SPECIFICATION

(11) **EP 3 970 988 B1**
(45) Date of publication and mention of the grant of the patent: **03.01.2024**
(21) Application number: 20806620.9
(22) Date of filing: 22.04.2020
(51) Int. Cl.: B60C 1/00, B60C 13/00, B60C 9/04, C08K 5/00, C08L 21/00, C08K 3/04

(54) **PNEUMATIC TIRE**
LUFTREIFEN
PNEUMATIQUE

(30) Priority: 14.05.2019 JP 2019091538
(43) Date of publication of application: 23.03.2022
(73) Proprietor: BRIDGESTONE CORPORATION, Chuo-ku Tokyo 104-8340 (JP)
(72) Inventor: MIURA, Takahiro, Tokyo 104-8340 (JP)
(74) Representative: Marks & Clerk LLP
(86) International application number: PCT/JP2020/017376
(87) International publication number: WO 2020/230560

(56) References cited:
- EP-A1- 3 196 053
- EP-B1- 2 799 247
- JP-A- 2007 331 422
- JP-A- 2008 308 083
- JP-A- 2009 220 692
- JP-A- 2011 173 469
- JP-A- 2012 153 272
- JP-A- 2014 218 096
- JP-A- 2016 041 521

## Description

### TECHNICAL FIELD

The present disclosure relates to a pneumatic tire.

### BACKGROUND

Typically, tires generate static electricity during vehicle running. If static electricity is accumulated on tires, radio noise and spark discharge may cause vehicle failures and the like. It is therefore important to decrease the electrical resistance of tires and prevent electrification as much as possible. To prevent accumulation of static electricity on tires, tires in which conductive rubber is used in rubber members such as sidewalls and ply coating rubbers are currently available on the market.

In recent years, there is demand to reduce the loss (rolling resistance) of sidewall rubbers and ply coating rubbers in order to further enhance the fuel efficiency of tires. Examples of loss reduction means include reducing the amount of carbon black contained, and replacing carbon black with a filler such as silica. However, all these means tend to decrease the conductivity of tires. That is, there is generally a trade-off between conductivity and fuel efficiency in tires.

To improve the conductivity and rolling resistance performance of tires, for example, JP 2007-008269 A (PTL 1) discloses a technique of setting the content rate of silica in a reinforcing filler to 70 wt% or more in a tread portion, a sidewall portion, and a ply portion and providing, inside the tire, a conductive rubber layer whose specific resistance value is less than or equal to a predetermined value, the conductive rubber layer being in contact with a bead portion and continuously extending to the contact patch of the tread portion through the gap between the sidewall portion and the ply portion.

For example, JP 2013-226917 A (PTL 2) discloses a technique of providing a side conductive layer made of conductive rubber between a sidewall rubber and a carcass and increasing the height of the outer end of a rim strip rubber in contact with the side conductive layer and a rim to ensure the stiffness of a tire outer portion while maintaining conducting performance and low rolling resistance.
EP2799247 discloses a pneumatic tire capable of ensuring conductivity while being reduced in weight, and further having good fuel efficiency and handling stability.

### CITATION LIST

### Patent Literature

PTL 1: JP 2007-008269 A
PTL 2: JP 2013-226917 A

### SUMMARY

### (Technical Problem)

However, in the case where a conductive rubber layer is provided between a sidewall rubber and a carcass as in the tires disclosed in PTL 1 and PTL 2, there is a possibility that, due to the property difference between these members, the tire is locally deformed and decreases in durability. Such local deformation causes heat generation, as a result of which the fuel efficiency of the tire degrades. The tires disclosed in PTL 1 and PTL 2 thus have room for improvement in durability and fuel efficiency.

Moreover, the tires disclosed in PTL 1 and PTL 2 are not subjected to any particular measures to enhance the ozone resistance, and have room for improvement in ozone resistance.

It could therefore be helpful to provide a pneumatic tire excellent in fuel efficiency, durability, and ozone resistance while having high conductivity.

### (Solution to Problem)

A pneumatic tire according to the present disclosure comprises a carcass and a sidewall rubber, wherein the sidewall rubber is formed by laminating two or more layers of rubbers including a sidewall outermost layer rubber at a tire outer surface and a sidewall inner layer rubber closer to a tire inner surface than the sidewall outermost layer rubber is, the carcass is composed of at least one carcass ply each including a carcass cord and a ply coating rubber covering the carcass cord, the ply coating rubber has a volume resistivity of 1 × 10¹⁰ Ω·cm or more, the sidewall outermost layer rubber has a volume resistivity of 1 × 10¹⁰ Ω·cm or more, the sidewall inner layer rubber has a volume resistivity of 1 × 10⁷ Ω·cm or less, the sidewall inner layer rubber has a maximum thickness of 0.1 mm or more and 1.2 mm or less, a mass ratio of an anti oxidant in the sidewall inner layer rubber is 1.2 mass% or more, a proportion of the mass ratio of the anti oxidant in the sidewall inner layer rubber to a mass ratio of an anti oxidant in the sidewall outermost layer rubber, calculated as (the mass ratio of the anti oxidant in the sidewall inner layer rubber)/(the mass ratio of the anti oxidant in the sidewall outermost layer rubber), is 0.7 or more and 2.0 or less, and a proportion E'_{swout}/E'_{swin} of a storage modulus E'_{swout} of the sidewall outermost layer rubber at a dynamic strain of 1 % and 25 °C to a storage modulus E'_{swin} of the sidewall inner layer rubber at a dynamic strain of 1 % and 25 °C is more than 0.57 and less than 1.5.

### (Advantageous Effect)

It is therefore possible to provide a tire excellent in fuel efficiency, durability, and ozone resistance while having high conductivity.

### BRIEF DESCRIPTION OF THE DRAWINGS

In the accompanying drawings:
FIG. 1 is a schematic cross-sectional view of the left half of a pneumatic tire according to one of the disclosed embodiments taken along a plane including its rotational axis; and
FIG. 2 is a schematic cross-sectional view of the left half of a pneumatic tire according to another one of the disclosed embodiments taken along a plane including its rotational axis.

### DETAILED DESCRIPTION

A pneumatic tire according to the present disclosure will be described in detail below by way of embodiments.

A pneumatic tire (hereafter also simply referred to as "tire") according to the present disclosure includes a carcass and a sidewall rubber. The sidewall rubber is formed by laminating two or more layers of rubbers including a sidewall outermost layer rubber at the tire outer surface and a sidewall inner layer rubber closer to the tire inner surface than the sidewall outermost layer rubber is. The carcass includes a carcass cord and a ply coating rubber covering the carcass cord.

The ply coating rubber has a volume resistivity of 1 × 10¹⁰ Ω·cm or more, the sidewall outermost layer rubber has a volume resistivity of 1 × 10¹⁰ Ω·cm or more, and the sidewall inner layer rubber has a volume resistivity of 1 × 10⁷ Ω·cm or less.

The sidewall inner layer rubber has a maximum thickness of 0.1 mm or more and 1.2 mm or less.

The mass ratio of an anti oxidant in the sidewall inner layer rubber is 1.2 mass% or more.

The proportion ((the mass ratio of the anti oxidant in the sidewall inner layer rubber)/(the mass ratio of the anti oxidant in the sidewall outermost layer rubber)) of the mass ratio of the anti oxidant in the sidewall inner layer rubber to the mass ratio of the anti oxidant in the sidewall outermost layer rubber is 0.7 or more and 2.0 or less.

The proportion (E'_{swout}/E'_{swin}) of the storage modulus E'_{swout} of the sidewall outermost layer rubber at a dynamic strain of 1 % and 25 °C to the storage modulus E'_{swin} of the sidewall inner layer rubber at a dynamic strain of 1 % and 25 °C is more than 0.57 and less than 1.5.

The tire according to the present disclosure has all of these features and thus is excellent in fuel efficiency, durability, and ozone resistance while having high conductivity.

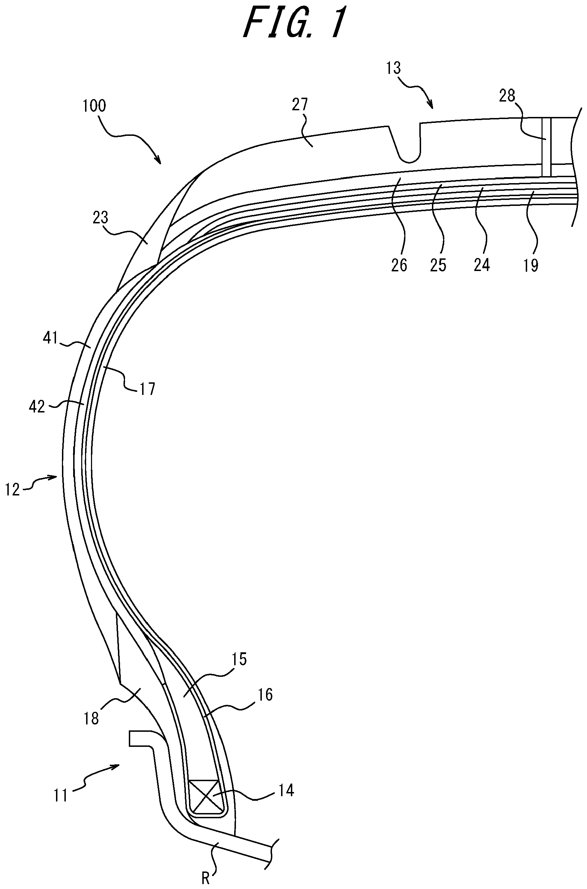

FIG. 1 is a schematic cross-sectional view of the left half of a tire according to one of the disclosed embodiments taken along a plane including its rotational axis. A cross-sectional view of the right half is the same in structure as that of the left half and accordingly is omitted. In FIG. 1, a tire 100 includes a pair of bead portions 11, a pair of sidewall portions 12, and a tread portion 13. A pair of bead cores 14 are buried in the bead portions 11, and a sidewall rubber is provided in each sidewall portion 12. The tire 100 also includes a carcass 16 that extends from the tread portion 13 through the sidewall portion 12 and is folded from inside to outside in the tire axial direction around the bead core 14 and a bead filler 15 and held by a folding portion. The bead filler 15 extends outward in the tire radial direction from the upper end of the bead core 14. The carcass 16 is composed of one or more carcass plies each including a carcass cord and a ply coating rubber covering the carcass cord. The tire 100 includes an inner liner rubber 17 along the inner surface of the carcass 16, as an inner rubber member.

The tire 100 includes, in the bead portion 11, a rubber chafer 18 as a conductive rubber member located above a rim R. The tire 100 also includes, in the tread portion 13, a belt 19, a cap layer 24, a top under cushion 25, a base tread 26, and a cap tread 27 in this order on the outer circumferential side of the carcass 16 to strengthen the tread portion 13. The belt 19 is composed of one or more layers of belt plies each including a belt cord and a belt coating rubber covering the belt cord. The sidewall rubber in the sidewall portion 12 is formed by laminating a sidewall outermost layer rubber 41 at the outer surface and a sidewall inner layer rubber 42 closer to the tire inner surface than the sidewall outermost layer rubber is 41, and the sidewall inner layer rubber 42 is located between the sidewall outermost layer rubber 41 and the carcass 16. In this example, the sidewall inner layer rubber 42 is located between and adjacent to the sidewall outermost layer rubber 41 and the carcass 16. The sidewall inner layer rubber 42 is at least in contact with the rubber chafer 18 in the bead portion 11 and the top under cushion 25 in the tread portion 13. Further, in the tread portion 13, an antenna rubber 28 as a conductive rubber member is in contact with the top under cushion 25 and is partially exposed to the tire contact patch.

Thus, the tire 100 illustrated in FIG. 1 has a structure in which the conductive rubber member located above the rim R, i.e. the rubber chafer 18, and the antenna rubber 28 exposed to the contact patch are connected via the sidewall inner layer rubber 42 and the top under cushion 25.

The conductivity, the fuel efficiency, the durability, and the ozone resistance of the tire 100 can be improved in a balanced manner by appropriately adjusting the volume resistivity, the anti oxidant mass ratio, the storage modulus E', and the like for the ply coating rubber, the sidewall inner layer rubber 42, and the sidewall outermost layer rubber 41 as mentioned above.

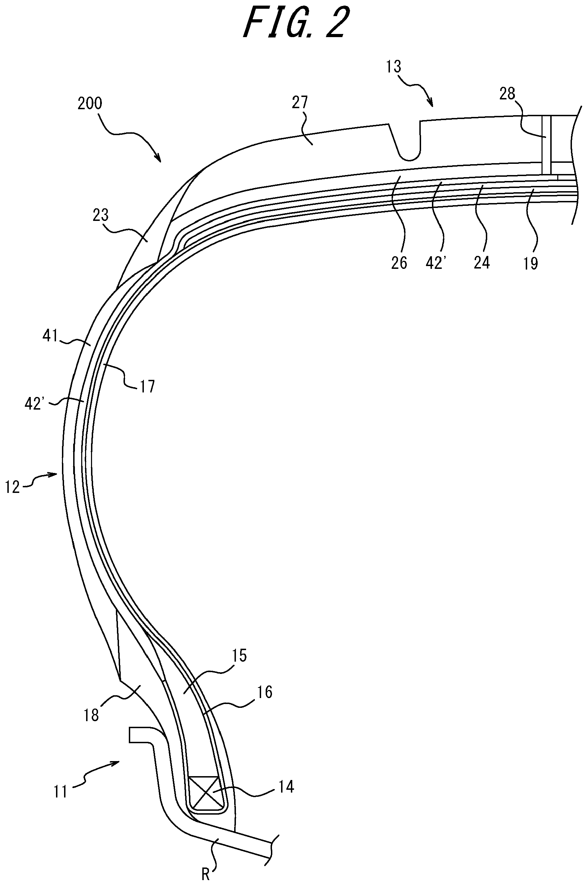

FIG. 2 is a schematic cross-sectional view of the left half of a tire according to another one of the disclosed embodiments taken along a plane including its rotational axis. A cross-sectional view of the right half is the same in structure as that of the left half and accordingly is omitted. In FIG. 2, the same members as those in FIG. 1 are given the same reference signs as in FIG. 1. A tire 200 in FIG. 2 is different from the tire 100 in FIG. 1 in that a sidewall inner layer rubber 42' is continuous from the sidewall portion 12 to the tread portion 13 and is connected to the antenna rubber 28. The conductivity, the fuel efficiency, the durability, and the ozone resistance of the tire 200 can be improved in a balanced manner by appropriately adjusting the volume resistivity, the anti oxidant mass ratio, the storage modulus E', and the like for the ply coating rubber, the sidewall inner layer rubber 42', and the sidewall outermost layer rubber 41 as mentioned above, too.

The sidewall inner layer rubber is not limited to the structures illustrated in FIGS. 1 and 2 as long as it is located closer to the tire inner surface than the sidewall outermost layer rubber. More specifically, the sidewall inner layer rubber may, for example, extend directly to the tire contact patch.

Although two layers, i.e. the sidewall outermost layer rubber 41 and the sidewall inner layer rubber 42 or 42', are laminated in the sidewall portion 12 in FIGS. 1 and 2 as sidewall rubbers, one or more layers of sidewall rubbers may be further laminated.

The tire may further include a mini-sidewall rubber 23 that is in contact with the sidewall portion 12 and the tread portion 13 and acts as an interface therebetween, as illustrated in FIGS. 1 and 2.

Each of the members included in the foregoing tire will be described in detail below.

### (Carcass)

The carcass is composed of one or more carcass plies each including a carcass cord and a ply coating rubber covering the carcass cord, as mentioned above.

Examples of the carcass cord include single-twist cords made of organic fibers such as nylon 66 fibers, aramid fibers, nylon fibers, polyethylene naphthalate (PEN) fibers, polyethylene (PE) fibers, and polyethylene terephthalate (PET) fibers, and composite cords in which a plurality of cords of different organic fibers mentioned above are twisted, without being limited thereto.

The volume resistivity of the ply coating rubber is 1 × 10¹⁰ Ω·cm or more. If the volume resistivity of the ply coating rubber is less than 1 × 10¹⁰ Ω·cm, a larger amount of carbon black needs to be contained, which may cause a decrease in the fuel efficiency of the tire. The volume resistivity of the ply coating rubber is preferably 1 × 10¹¹ Ω·cm or more and more preferably 1 × 10¹² Ω·cm or more, from the viewpoint of further improving the fuel efficiency of the tire.

The volume resistivity of the ply coating rubber can be adjusted, for example, by adjusting the content of carbon black.

Herein, the volume resistivity of a member such as the ply coating rubber can be measured in accordance with the procedure described in the EXAMPLES section.

The loss tangent (tanδ) of the ply coating rubber at 25 °C is preferably 0.20 or less. If tanδ is 0.20 or less, the low loss property of the tire can be enhanced and the fuel efficiency of the tire can be further improved. From the same viewpoint, tanδ of the ply coating rubber at 25 °C is more preferably 0.17 or less.
tanδ of the ply coating rubber can be adjusted, for example, by adjusting the content of fillers such as carbon black and silica or adjusting the ratio of the rubber component.

Herein, tanδ of a member such as the ply coating rubber can be measured in accordance with the procedure described in the EXAMPLES section.

The storage modulus E'_{pc} of the ply coating rubber at a dynamic strain of 1 % and 25 °C is preferably 5.0 MPa or more and 10.0 MPa or less. If E'_{pc} is within this range, the durability of the tire can be further improved.

The storage modulus of the ply coating rubber can be adjusted, for example, by adjusting the content of fillers or adjusting the crosslinking density.

The carcass before tire molding can be produced by sandwiching a carcass cord between sheets made of a rubber composition for ply coating rubber. For example, the rubber composition for ply coating rubber may contain a rubber component, carbon black, silica, a vulcanizing agent such as sulfur, a vulcanization accelerator, and an anti oxidant. The rubber composition for ply coating rubber may further contain, besides the foregoing components, compounding agents typically used for production of rubber members, such as a wax, a softener, a plasticizer, and a tackifier, as appropriate. The rubber composition for ply coating rubber can be prepared by kneading the components using a Banbury mixer, a kneader, an open roll, or the like.

Examples of the rubber component include natural rubber (NR) and synthetic rubber. Examples of the synthetic rubber include butadiene rubber (BR), styrene-butadiene rubber (SBR), isoprene rubber (IR), butyl rubber (IIR), halogenated butyl rubber, chloroprene rubber (CR), acrylonitrile-butadiene rubber (NBR), and ethylene-propylene-diene rubber (EPDM). One rubber component may be used alone, or two or more rubber components may be used in combination.

Examples of the silica include wet silica and dry silica. One silica may be used alone, or two or more silicas may be used in combination.

Examples of the vulcanization accelerator include sulfenamide vulcanization accelerators such as N-cyclohexyl-2-benzothiazolyl sulfenamide (CBS), N-t-butyl-2-benzothiazil sulfenamide (TBBS), and N-t-butyl-2-benzothiazil sulfenimide (TBSI); guanidine vulcanization accelerators such as diphenylguanidine (DPG); thiuram vulcanization accelerators such as tetraoctylthiuram disulfide and tetrabenzylthiuram disulfide; and vulcanization accelerators such as zinc dialkyldithiophosphate. Of these, CBS is preferable as the vulcanization accelerator. One vulcanization accelerator may be used alone, or two or more vulcanization accelerators may be used in combination.

Examples of the anti oxidant include N-phenyl-N'-(1,3-dimethylbutyl)-p-phenylenediamine (6PPD), 2,2,4-trimethyl-1,2-dihydroquinoline polymer (TMDQ), 6-ethoxy-2,2,4-trimethyl-1,2-dihydroquinoline (AW), N,N'- diphenyl-p-phenylenediamine (DPPD), N,N'-di -sec-butyl-p-phenylenediamine, and N-phenyl-N'-(methylheptyl)-p-phenylenediamine. Of these, 6PPD is preferable as the anti oxidant. One anti oxidant may be used alone, or two or more anti oxidants may be used in combination.

The ply coating rubber preferably contains carbon black. In the case where the ply coating rubber contains carbon black, the nitrogen adsorption specific surface area of the carbon black is preferably 20 m²/g or more from the viewpoint of durability, and preferably 50 m²/g or less and more preferably 35 m²/g or less from the viewpoint of fuel efficiency. The content of carbon black in the ply coating rubber is preferably 30 parts by mass or more with respect to 100 parts by mass of the rubber component from the viewpoint of durability, and preferably 50 parts by mass or less with respect to 100 parts by mass of the rubber component from the viewpoint of fuel efficiency.

The mass ratio of the anti oxidant in the ply coating rubber is preferably 0.4 mass% or more and 1.0 mass% or less. If the mass ratio of the anti oxidant in the ply coating rubber is within this range, the ozone resistance of the tire can be further improved.

Herein, the mass ratio of the anti oxidant in a member such as the ply coating rubber denotes not the number of parts of the anti oxidant with respect to 100 parts by mass of the rubber component but the mass ratio of the anti oxidant to the total mass of the member.

### (Sidewall inner layer rubber)

The volume resistivity of the sidewall inner layer rubber is 1 × 10⁷ Ω·cm or less. If the volume resistivity of the sidewall inner layer rubber is more than 1 × 10⁷ Ω·cm, static electricity cannot be sufficiently released from the tire, which may cause degradation in conductivity. The volume resistivity of the sidewall inner layer rubber is preferably 5 × 10⁶ Ω·cm or less, more preferably 3 × 10⁶ Ω·cm or less, and further preferably 1 × 10⁶ Ω·cm or less, from the viewpoint of further improving the conductivity of the tire.

The volume resistivity of the sidewall inner layer rubber can be adjusted, for example, by adjusting the content of carbon black.

The storage modulus E'_{swin} of the sidewall inner layer rubber at a dynamic strain of 1 % and 25 °C is preferably 3.0 MPa or more and 8.0 MPa or less. If E'_{swin} is within this range, the durability of the tire can be further improved.

The storage modulus of the sidewall inner layer rubber can be adjusted, for example, by adjusting the content of fillers such as carbon black and silica, changing the type of carbon black, changing the type of silica, adjusting the ratio of the rubber component, or adjusting the content of the softener.

The maximum thickness of the sidewall inner layer rubber is 0.1 mm or more and 1.2 mm or less. If the maximum thickness of the sidewall inner layer rubber is less than 0.1 mm, static electricity cannot be sufficiently released from the tire, which may cause degradation in conductivity. If the maximum thickness of the sidewall inner layer rubber is more than 1.2 mm, the fuel efficiency of the tire may degrade. The maximum thickness of the sidewall inner layer rubber is preferably 0.2 mm or more and more preferably 0.25 mm or more from the viewpoint of further improving the conductivity, and preferably 1.0 mm or less and more preferably 0.6 mm or less from the viewpoint of further improving the fuel efficiency.

The sidewall inner layer rubber before tire molding can be produced by processing a rubber composition for sidewall inner layer rubber into a predetermined shape. For example, the rubber composition for sidewall inner layer rubber may contain a rubber component, carbon black, silica, a vulcanizing agent such as sulfur, a vulcanization accelerator, and an anti oxidant. The rubber composition for sidewall inner layer rubber may further contain, for example, the compounding agents described above with regard to the ply coating rubber as appropriate. The rubber composition for sidewall inner layer rubber can be prepared by kneading the components using a Banbury mixer, a kneader, an open roll, or the like.

Specific examples of the rubber component, the silica, the vulcanization accelerator, and the anti oxidant are the same as those described above with regard to the ply coating rubber.

The sidewall inner layer rubber preferably contains carbon black (I) having a nitrogen adsorption specific surface area of 25 m²/g or more and 75 m²/g or less and carbon black (II) having a nitrogen adsorption specific surface area of more than 75 m²/g and 150 m²/g or less. Using the carbon black (I) and the carbon black (II) together can achieve more favorable balance between the conductivity and fuel efficiency of the tire. From the same viewpoint, the sidewall inner layer rubber (and the rubber composition for sidewall inner layer rubber) preferably contains 10 parts to 80 parts by mass of the carbon black (I) having a nitrogen adsorption specific surface area of 25 m²/g or more and 75 m²/g or less with respect to 100 parts by mass of the rubber component, and 5 parts to 30 parts by mass of the carbon black (II) having a nitrogen adsorption specific surface area of more than 75 m²/g and 150 m²/g or less with respect to 100 parts by mass of the rubber component.

The mass ratio of the anti oxidant in the sidewall inner layer rubber in the tire is 1.2 mass% or more. If the mass ratio of the anti oxidant in the sidewall inner layer rubber is less than 1.2 mass%, the ozone resistance of the tire may not be able to be improved. The mass ratio of the anti oxidant in the sidewall inner layer rubber is preferably 1.4 mass% or more and more preferably 1.8 mass% or more, from the viewpoint of further improving the ozone resistance of the tire. The mass ratio of the anti oxidant in the sidewall inner layer rubber is preferably 5.0 mass% or less, from the viewpoint of more sufficiently achieving the effects by the other components.

Herein, the mass ratio of the anti oxidant in a member such as the sidewall inner layer rubber denotes not the number of parts of the anti oxidant with respect to 100 parts by mass of the rubber component but the mass ratio of the anti oxidant to the total mass of the member.

### (Sidewall outermost layer rubber)

The volume resistivity of the sidewall outermost layer rubber is 1 × 10¹⁰ Ω·cm or more. If the volume resistivity of the sidewall outermost layer rubber is less than 1 × 10¹⁰ Ω·cm, a larger amount of carbon black needs to be contained, which may cause a decrease in the fuel efficiency of the tire. The volume resistivity of the sidewall outermost layer rubber is preferably 1 × 10¹¹ Ω·cm or more and more preferably 1 × 10¹² Ω·cm or more, from the viewpoint of further improving the fuel efficiency of the tire.

The volume resistivity of the sidewall outermost layer rubber can be adjusted, for example, by adjusting the content of carbon black.

The loss tangent (tanδ) of the sidewall outermost layer rubber at 25 °C is preferably 0.15 or less. If tanδ is 0.15 or less, the low loss property of the tire can be enhanced and the fuel efficiency of the tire can be further improved. From the same viewpoint, tanδ of the sidewall outermost layer rubber at 25 °C is more preferably less than 0.10.

Herein, tanδ of a member such as the ply coating rubber can be measured in accordance with the procedure described in the EXAMPLES section.
tanδ of the sidewall outermost layer rubber can be adjusted, for example, by adjusting the content of fillers such as carbon black and silica or adjusting the content of the softener.

The storage modulus E'_{swout} of the sidewall outermost layer rubber at a dynamic strain of 1 % and 25 °C is preferably 2.0 MPa or more and 7.0 MPa or less. If E'_{swout} is within this range, the durability of the tire can be further improved.

The storage modulus of the sidewall outermost layer rubber can be adjusted, for example, by adjusting the content of fillers such as carbon black and silica, adjusting the ratio of the rubber component, or adjusting the crosslinking density.

The sidewall outermost layer rubber before tire molding can be produced by processing a rubber composition for sidewall outermost layer rubber into a predetermined shape. For example, the rubber composition for sidewall outermost layer rubber may contain a rubber component, carbon black, silica, a vulcanizing agent such as sulfur, a vulcanization accelerator, and an anti oxidant. The rubber composition for sidewall outermost layer rubber may further contain, for example, the compounding agents described above with regard to the ply coating rubber as appropriate. The rubber composition for sidewall outermost layer rubber can be prepared by kneading the components using a Banbury mixer, a kneader, an open roll, or the like.

Specific examples of the rubber component, the silica, the vulcanization accelerator, and the anti oxidant are the same as those described above with regard to the ply coating rubber.

The sidewall outermost layer rubber preferably contains carbon black. In the case where the sidewall outermost layer rubber contains carbon black, the nitrogen adsorption specific surface area of the carbon black is preferably 30 m²/g or more from the viewpoint of durability, and preferably 70 m²/g or less and more preferably 55 m²/g or less from the viewpoint of low heat generating property. The content of carbon black in the sidewall outermost layer rubber is preferably 10 parts by mass or more with respect to 100 parts by mass of the rubber component from the viewpoint of durability, and preferably 50 parts by mass or less with respect to 100 parts by mass of the rubber component from the viewpoint of low heat generating property.

The mass ratio of the anti oxidant in the sidewall outermost layer rubber is preferably 0.5 mass% or more and 3.0 mass% or less. If the mass ratio of the anti oxidant in the sidewall outermost layer rubber is within this range, the ozone resistance of the tire can be further improved.

Herein, the mass ratio of the anti oxidant in a member such as the sidewall outermost layer rubber denotes not the number of parts of the anti oxidant with respect to 100 parts by mass of the rubber component but the mass ratio of the anti oxidant to the total mass of the member.

### (Sidewall rubber)

The mass ratio of the anti oxidant in the whole sidewall rubber including the sidewall inner layer rubber and the sidewall outermost layer rubber in the tire is preferably 1.2 mass% or more. If the mass ratio is 1.2 mass% or more, the ozone resistance of the tire can be further improved. From the same viewpoint, the mass ratio of the anti oxidant in the whole of the sidewall outermost layer rubber and the sidewall inner layer rubber is more preferably 1.4 mass% or more. The mass ratio of the anti oxidant in the whole of the sidewall outermost layer rubber and the sidewall inner layer rubber is preferably 4.0 mass% or less, from the viewpoint of more sufficiently achieving the effects by the other components.

### <Proportion in mass ratio of anti oxidant between members>

The proportion ((the mass ratio of the anti oxidant in the sidewall inner layer rubber)/(the mass ratio of the anti oxidant in the sidewall outermost layer rubber)) of the mass ratio of the anti oxidant in the sidewall inner layer rubber to the mass ratio of the anti oxidant in the sidewall outermost layer rubber in the tire is 0.7 or more and 2.0 or less. If the proportion in mass ratio is less than 0.7, the anti oxidant in the sidewall inner layer rubber is less than the anti oxidant in the sidewall outermost layer rubber, so that the anti oxidant in the sidewall outermost layer rubber may move to the sidewall inner layer rubber and cause degradation in the ozone resistance of the tire. If the proportion in mass ratio is more than 2.0, the anti oxidant in the sidewall outermost layer rubber is less than the anti oxidant in the sidewall inner layer rubber, so that the ozone resistance of the tire may degrade. Moreover, the durability may degrade as a result of a decrease in the adhesiveness of the ply coating rubber. The proportion in mass ratio is preferably 0.75 or more and more preferably 0.90 or more, and preferably 1.6 or less and more preferably 1.3 or less, from the viewpoint of further improving the ozone resistance and durability of the tire.

### <Proportion in storage modulus between members>

The proportion (E'_{swout}/E'_{swin}) of the storage modulus E'_{swout} of the sidewall outermost layer rubber at a dynamic strain of 1 % and 25 °C to the storage modulus E'_{swin} of the sidewall inner layer rubber at a dynamic strain of 1 % and 25 °C in the tire is more than 0.57 and less than 1.5. If the proportion is 0.57 or less or 1.5 or more, the tire may be locally deformed due to undesired stiffness difference and as a result decrease in durability. Moreover, the fuel efficiency of the tire may degrade as a result of heat generation in the deformed part. The proportion is preferably 0.6 or more and preferably 1.2 or less, from the viewpoint of maintaining favorable durability and fuel efficiency.

Herein, the storage modulus of each member can be measured in accordance with the procedure described in the EXAMPLES section.

The proportion (E'_{swin}/E'_{pc}) of the storage modulus E'_{swin} of the sidewall inner layer rubber at a dynamic strain of 1 % and 25 °C to the storage modulus E'_{pc} of the ply coating rubber at a dynamic strain of 1 % and 25 °C in the tire is preferably more than 0.5 and less than 1.0. If the proportion is more than 0.5 and less than 1.0, local deformation of the tire caused by undesired stiffness difference can be effectively suppressed, and the durability and fuel efficiency of the tire can be further improved.

In the tire, E'_{swout}, E'_{swin}, and E'_{pc} preferably satisfy the relationship E'_{swout} < E'_{swin} < E'_{pc}. If this inequality is satisfied, local deformation of the tire caused by undesired stiffness difference can be suppressed more effectively, and the durability and fuel efficiency of the tire can be further improved.

### (Production of pneumatic tire)

The tire described above can be produced, for example, by the following method. The foregoing carcass, sidewall inner layer rubber, and sidewall outermost layer rubber processed into predetermined shapes beforehand are molded in a tire molding machine by a typical method together with the other tire members, to form an unvulcanized tire. The unvulcanized tire is then heated and pressurized (vulcanized) in a vulcanizer, to produce the tire.

It can be considered that, for the ply coating rubber, the sidewall inner layer rubber, and the sidewall outermost layer rubber, at least the mass ratio of carbon black is unchanged between immediately before and immediately after the vulcanization. It can also be considered that, for the ply coating rubber, the sidewall inner layer rubber, and the sidewall outermost layer rubber, the mass ratio of the anti oxidant may change between immediately before and immediately after the vulcanization but the change is slight.

### EXAMPLES

The presently disclosed techniques will be described in more detail below by way of examples, although the present disclosure is not limited to the following examples and changes can be made as appropriate without departing from the gist thereof.

### (Preparation of rubber composition for ply coating rubber)

A rubber composition for ply coating rubber was prepared with the formulation shown in Table 1 through kneading using a Banbury mixer.

**Table 1**

| (For ply coating rubber) | | a |
|---|---|---|
| Natural rubber | parts by mass | 70 |
| Styrene-butadiene rubber | | 30 |
| Carbon black | | 45 |
| Stearic acid | | 2 |
| Zinc oxide | | 4 |
| Anti oxidant (RD) | | 0.7 |
| Vulcanization accelerator (DM+NS) | | 0.83 |
| Sulfur | | 3.44 |
| Total | parts by mass | 155.97 |
| Mass ratio of anti oxidant | mass% | 0.45 |

Styrene-butadiene rubber: "JSR1500" made by JSR Corporation.

Carbon black: "STERLING V" made by Cabot Corporation, N660 (nitrogen adsorption specific surface area: 35 m²/g).

Anti oxidant (RD): "NOCRAC 224 (224-S)" made by Ouchi Shinko Chemical Industrial Co., Ltd., 2,2,4-trimethyl-1,2-dihydroquinoline polymer.

Vulcanization accelerator (DM + NS): mixture of "NOCCELER DM-P (DM)" (di-2-benzothiazolyl disulfide) and "NOCCELER NS-P (NS)" (N-tert-butyl-2-benzothiazolylsulfenamide) made by Ouchi Shinko Chemical Industrial Co., Ltd.

### (Preparation of rubber composition for sidewall outermost layer rubber)

A rubber composition X for sidewall outermost layer rubber was prepared with the corresponding formulation shown in Table 2 through kneading using a Banbury mixer. A rubber composition Z for sidewall outermost layer rubber was prepared with the corresponding formulation shown in Table 2 through kneading using a Banbury mixer.

**Table 2**

| (For sidewall outermost layer rubber) | | X | Z |
|---|---|---|---|
| Natural rubber | parts by mass | 40 | 40 |
| Butadiene rubber | | 60 | 60 |
| Carbon black | | 35 | 19 |
| Silica | | 0 | 16 |
| Silane coupling agent | | 0 | 1.28 |
| Oil | | 4 | 4 |
| Stearic acid | | 2 | 2 |
| Zinc oxide | | 3 | 3 |
| Anti oxidant (RD+6C) | | 3 | 3 |
| Wax | | 1.7 | 1.7 |
| DCPD resin | | 1 | 1 |
| Vulcanization accelerator (CZ) | | 0.6 | 0.6 |
| Sulfur | | 1.58 | 1.58 |
| Total | parts by mass | 151.88 | 153.16 |
| Mass ratio of anti oxidant | mass% | 1.98 | 1.96 |

Butadiene rubber: "UBEPOL 150L" made by Ube Industries, Ltd.

Carbon black: "Asahi #65" made by Asahi Carbon Co., Ltd., N550 (nitrogen adsorption specific surface area: 42 m²/g).

Silica: nitrogen adsorption specific surface area: 105 m²/g, CTAB specific surface area: 90 m²/g.

Anti oxidant (RD + 6C): mixture of "NOCRAC 224 (224-S)" (2,2,4-trimethyl-1,2-dihydroquinoline polymer) and "NOCRAC 6C" (N-phenyl-N'-(1,3-dimethylbutyl)-p-phenylenediamine) made by Ouchi Shinko Chemical Industrial Co., Ltd.

DCPD resin: "Quintone1105" made by Zeon Corporation.

Vulcanization accelerator (CZ): "NOCCELER CZ" made by Ouchi Shinko Chemical Industrial Co., Ltd., N-cyclohexyl-2-benzothiazolylsulfenamide.

### (Preparation of rubber composition for sidewall inner layer rubber)

Rubber compositions A, B, C, E, G, H, and I for sidewall inner layer rubber were each prepared with the corresponding formulation shown in Table 3 through kneading using a Banbury mixer.

**Table 3**

| (For sidewall inner layer rubber) | | A | B | C | E | G | H | I |
|---|---|---|---|---|---|---|---|---|
| Natural rubber | parts by mass | 50 | 50 | 50 | 50 | 50 | 50 | 50 |
| Butadiene rubber | | 50 | 50 | 50 | 50 | 50 | 50 | 50 |
| Carbon black 1 | | 30 | 25 | 30 | 30 | 30 | 40 | 38 |
| Carbon black 2 | | 15 | 20 | 10 | 15 | 10 | 0 | 15 |
| Oil | | 4 | 4 | 4 | 4 | 4 | 4 | 4 |
| DCPD resin | | 1 | 1 | 1 | 1 | 1 | 1 | 1 |
| Stearic acid | | 2 | 2 | 2 | 2 | 2 | 2 | 2 |
| Zinc oxide | | 3 | 3 | 3 | 3 | 3 | 3 | 3 |
| Anti oxidant (RD+6C) | | 3 | 3 | 3 | 5 | 1.5 | 3 | 3 |
| Wax | | 1.7 | 1.7 | 1.7 | 1.7 | 1.7 | 1.7 | 1.7 |
| Vulcanization accelerator (CZ) | | 0.6 | 0.6 | 0.6 | 0.6 | 0.6 | 0.6 | 0.6 |
| Sulfur | | 1.58 | 1.58 | 1.58 | 1.58 | 1.58 | 1.58 | 1.58 |
| Total | parts by mass | 161.88 | 161.88 | 156.88 | 163.88 | 155.38 | 156.88 | 169.88 |
| Mass ratio of anti oxidant | mass% | 1.85 | 1.85 | 1.91 | 3.05 | 0.97 | 1.91 | 1.77 |

Butadiene rubber: "UBEPOL 150L" made by Ube Industries, Ltd.

Carbon black 1: "Asahi #65" made by Asahi Carbon Co., Ltd., N550 (nitrogen adsorption specific surface area: 42 m²/g).

Carbon black 2: "DIABLACK N234" made by Mitsubishi Chemical Corporation, N234 (nitrogen adsorption specific surface area: 123 m²/g).

DCPD resin: "Quintone1105" made by Zeon Corporation.

Anti oxidant (RD + 6C): mixture of "NOCRAC 224 (224-S)" (2,2,4-trimethyl-1,2-dihydroquinoline polymer) and "NOCRAC 6C" (N-phenyl-N'-(1,3-dimethylbutyl)-p-phenylenediamine) made by Ouchi Shinko Chemical Industrial Co., Ltd.

Vulcanization accelerator (CZ): "NOCCELER CZ" made by Ouchi Shinko Chemical Industrial Co., Ltd., N-cyclohexyl-2-benzothiazolylsulfenamide.

### (Production of pneumatic tire)

The rubber compositions obtained in the above-described manner were combined as shown in Table 4, and processed into predetermined shapes and used in the corresponding members. These members were molded together with other tire members such as a rubber chafer, an antenna rubber, and the like, and then vulcanized according to an ordinary method to produce each pneumatic tire having the structure illustrated in FIG. 1. As carcass cords, single-twist cords made of nylon 66 fibers were used.

The volume resistivity, storage modulus, and loss tangent (tanδ) of the ply coating rubber, the sidewall inner layer rubber, and the sidewall outermost layer rubber in each pneumatic tire were measured as follows. The results are shown in Table 4.

### <Volume resistivity>

A test piece of 70 mm × 10 mm × 2 mm was collected from each member in the pneumatic tire of each example. For the test piece, the volume resistivity of the member was measured in accordance with JIS K 6271 (2008) using "R8340" made by Advantest Corporation.

### <Storage modulus and tanδ>

A test piece of 50 mm × 5 mm × 2 mm was collected from each member in the pneumatic tire of each example. For the test piece, the storage modulus (E') and the loss tangent (tanδ) at 25 °C were measured under the conditions of an initial strain of 2 %, a dynamic strain of 1 %, and a frequency of 52 Hz, using a spectrometer made by Ueshima Seisakusho Co., Ltd. tanδ was measured only for the ply coating rubber and the sidewall inner layer rubber.

### (Evaluation)

The conductivity, fuel efficiency, ozone resistance, and durability of the pneumatic tire of each example were evaluated in accordance with the following procedures. The results are shown in Table 4.

### <Conductivity>

The tread portion of the pneumatic tire of each example was placed on an iron plate under the conditions of an internal pressure of 2.0 MPa and a load of 4.7 kN, and the volume resistivity between the rim and the iron plate was measured with an applied voltage of 100 V. The volume resistivity of the tire of each example is represented by an index, where the volume resistivity of the tire of Comparative Example 1 is 100.

A smaller index value indicates better conductivity. More specifically, the conductivity is determined as favorable in the case where the index value is 90 or less.

### <Fuel efficiency>

The pneumatic tire of each example was rotated at a speed of 80 km/hr using a rotating drum, and the rolling resistance was measured with a load of 4.82 kN. The rolling resistance of the tire of each example is represented by an index, where the inverse of the rolling resistance of the tire of Comparative Example 1 is 100.

A larger index value indicates lower rolling resistance and better fuel efficiency. More specifically, the fuel efficiency is determined as favorable in the case where the index value is 93 or more.

### <Ozone resistance>

The pneumatic tire of each example was attached to an applicable rim (size: 15 × 6 J), set to an internal pressure of 240 kPa, and run for 300 hr at a speed of 60 km/m with an ozone concentration of 30 pphm. The crack area in the maximum strain portion on the tire side after running was measured using X-Loupe made by Lumos Tech. The crack area of the tire of each example is represented by an index, where the inverse of the crack area of the tire of Comparative Example 1 is 100.

A larger index value indicates better ozone resistance. More specifically, the ozone resistance is determined as favorable in the case where the index value is 94 or more.

### <Durability>

The pneumatic tire of each example was attached to an applicable rim (size: 15 × 6 J), set to an internal pressure of 240 kPa, and subjected to a drum endurance test under the conditions of a load 4.17 kN, a speed of 89 km/h, and 38 °C. The running distance until a failure occurred was measured. The running distance of the tire of each example is represented by an index, where the running distance of the tire of Comparative Example 1 is 100.

A larger index value indicates better durability. More specifically, the durability is determined as favorable in the case where the index value is 98 or more.

### <Comprehensive evaluation>

Based on the foregoing evaluation results, each example was comprehensively evaluated as good in the case where the index value of the volume resistivity for the evaluation of the conductivity was 90 or less, the index value of the rolling resistance for the evaluation of the fuel efficiency was 93 or more, the index value of the crack area for the evaluation of the ozone resistance was 94 or more, and the index value of the running distance of the tire for the evaluation of the durability was 98 or more, and comprehensively evaluated as poor in the case where at least one index value did not meet the criterion.

**Table 4**

| | | Example | | | | | Comparative Example | | |
|---|---|---|---|---|---|---|---|---|---|
| | | 1 | 2 | 3 | 4 | 5 | 1 | 2 | 3 |
| Ply coating rubber (PC) | | | | | | | | | |
| Rubber composition used | | a | a | a | a | a | a | a | a |
| Mass ratio of anti oxidant | mass% | 0.62 | 0.62 | 0.62 | 0.62 | 0.62 | 0.62 | 0.62 | 0.62 |
| Volume resistivity | Ω·cm | 4×10¹³ | 4×10¹³ | 4×10¹³ | 4×10¹³ | 4×10¹³ | 4×10¹³ | 4×10¹³ | 4×10¹³ |
| Storage modulus (E'_{pc}) | MPa | 6.8 | 6.8 | 6.8 | 6.8 | 6.8 | 6.8 | 6.8 | 6.8 |
| tanδ | - | 0.17 | 0.17 | 0.17 | 0.17 | 0.17 | 0.17 | 0.17 | 0.17 |

| Sidewall inner layer rubber (SWIN) | | | | | | | | | |
|---|---|---|---|---|---|---|---|---|---|
| Rubber composition used | | A | B | C | E | A | H | G | I |
| Mass ratio of anti oxidant | mass% | 1.85 | 1.85 | 1.91 | 3.05 | 1.85 | 1.91 | 0.97 | 1.77 |
| Volume resistivity | Ω·cm | 2×10⁶ | 4×10⁵ | 9×10⁶ | 3×10⁶ | 2×10⁶ | 1×10¹⁴ | 1×10⁶ | 4×10⁵ |
| Storage modulus (E'_{swin}) | MPa | 5.0 | 6.5 | 4.0 | 5.0 | 5.0 | 4.5 | 5.0 | 7.2 |
| Maximum thickness | mm | 0.3 | 0.3 | 0.3 | 0.3 | 0.3 | 0.3 | 0.3 | 0.3 |

| Sidewall outermost layer rubber (SWOUT) | | | | | | | | | |
|---|---|---|---|---|---|---|---|---|---|
| Rubber composition used | | X | X | X | X | Z | X | X | X |
| Mass ratio of anti oxidant | mass% | 1.98 | 1.98 | 1.98 | 1.98 | 1.96 | 1.98 | 1.98 | 1.98 |
| Volume resistivity | Ω·cm | 1×10¹⁴ | 1×10¹⁴ | 1×10¹⁴ | 1×10¹⁴ | 1×10¹⁶ | 1×10¹⁴ | 1×10¹⁴ | 1×10¹⁴ |
| Storage modulus (E'_{swout}) | MPa | 4.0 | 4.0 | 4.0 | 4.0 | 3.0 | 4.0 | 4.0 | 4.0 |
| tanδ | - | 0.14 | 0.14 | 0.14 | 0.14 | 0.08 | 0.14 | 0.14 | 0.14 |
| Proportion in mass ratio of anti oxidant (SWIN/SWOUT) | | 0.93 | 0.93 | 0.96 | 1.54 | 0.94 | 0.96 | 0.49 | 0.89 |
| Proportion in storage modulus (E'_{swout}/E'_{swin}) | | 0.80 | 0.62 | 1.00 | 0.80 | 0.60 | 0.89 | 0.80 | 0.56 |
| Proportion in storage modulus (E'_{swin}/E'_{pc}) | | 0.74 | 0.96 | 0.59 | 0.74 | 0.74 | 0.66 | 0.74 | 1.06 |
| Conductivity | Index | 79 | 55 | 87 | 83 | 80 | 100 | 76 | 71 |
| Fuel efficiency | Index | 97 | 101 | 93 | 96 | 109 | 100 | 99 | 93 |
| Ozone resistance | Index | 100 | 100 | 100 | 140 | 95 | 100 | 80 | 100 |
| Durability | Index | 100 | 100 | 100 | 101 | 100 | 100 | 97 | 90 |
| Comprehensive evaluation | | Good | Good | Good | Good | Good | Poor | Poor | Poor |

As can be understood from Table 4, the pneumatic tire of each Example according to the present disclosure was better in all of conductivity, durability, fuel efficiency, and ozone resistance than the tire of each Comparative Example.

### INDUSTRIAL APPLICABILITY

It is thus possible to provide a tire excellent in fuel efficiency, durability, and ozone resistance while having high conductivity.

### REFERENCE SIGNS LIST

- 100, 200: tire
- 11: bead portion
- 12: sidewall portion
- 13: tread portion
- 14: bead core
- 15: bead filler
- 16: carcass
- 17: inner liner rubber
- 18: rubber chafer
- 19: belt
- 23: mini-sidewall rubber
- 24: cap layer
- 25: top under cushion
- 26: base tread
- 27: cap tread
- 28: antenna rubber
- 41: sidewall outermost layer rubber
- 42, 42': sidewall inner layer rubber
- R: rim

## Claims

1. A pneumatic tire comprising a carcass and a sidewall rubber, wherein the sidewall rubber is formed by laminating two or more layers of rubbers including a sidewall outermost layer rubber at a tire outer surface and a sidewall inner layer rubber closer to a tire inner surface than the sidewall outermost layer rubber is,
the carcass is composed of at least one carcass ply each including a carcass cord and a ply coating rubber covering the carcass cord,
the ply coating rubber has a volume resistivity of 1 × 10¹⁰ Ω·cm or more,
the sidewall outermost layer rubber has a volume resistivity of 1 × 10¹⁰ Ω·cm or more,
the sidewall inner layer rubber has a volume resistivity of 1 × 10⁷ Ω·cm or less,
the sidewall inner layer rubber has a maximum thickness of 0.1 mm or more and 1.2 mm or less,
a mass ratio of an anti oxidant in the sidewall inner layer rubber is 1.2 mass% or more,
a proportion of the mass ratio of the anti oxidant in the sidewall inner layer rubber to a mass ratio of an anti oxidant in the sidewall outermost layer rubber, calculated as (the mass ratio of the anti oxidant in the sidewall inner layer rubber)/(the mass ratio of the anti oxidant in the sidewall outermost layer rubber), is 0.7 or more and 2.0 or less, and
a proportion E'_{swout}/E_{swin} of a storage modulus E'_{swout} of the sidewall outermost layer rubber at a dynamic strain of 1 % and 25 °C to a storage modulus E'_{swin} of the sidewall inner layer rubber at a dynamic strain of 1 % and 25 °C is more than 0.57 and less than 1.5, wherein the volume resistivity of the ply coating rubber, the volume resistivity of the sidewall outermost layer rubber and the volume resistivity of the sidewall inner layer rubber are measured according to the method as disclosed in the description, and wherein the storage modulus E'_{swout} of the sidewall outermost layer rubber and the storage modulus E'_{swin} of the sidewall inner layer rubber are measured according to the method as disclosed in the description.

2. The pneumatic tire according to claim 1, wherein a proportion E'_{swin}/E'_{pc} of E'_{swin} to a storage modulus E'_{pc} of the ply coating rubber at a dynamic strain of 1 % and 25 °C is more than 0.5 and less than 1.0.

3. The pneumatic tire according to claim 2, wherein E'_{swout}, E'_{swin}, and E'_{pc} satisfy a relationship E'_{swout} < E'_{swin} < E'_{pc}.

4. The pneumatic tire according to any of claims 1 to 3, wherein tanδ of the sidewall outermost layer rubber at 25 °C is less than 0.10.

5. The pneumatic tire according to any of claims 1 to 4, wherein tanδ of the ply coating rubber at 25 °C is 0.20 or less.

6. The pneumatic tire according to any of claims 1 to 5, wherein the sidewall inner layer rubber contains 10 parts to 80 parts by mass of a carbon black (I) having a nitrogen adsorption specific surface area of 25 m²/g or more and 75 m²/g or less with respect to 100 parts by mass of a rubber component, and 5 parts to 30 parts by mass of a carbon black (II) having a nitrogen adsorption specific surface area of more than 75 m²/g and 150 m²/g or less with respect to 100 parts by mass of the rubber component.

## Patentansprüche

1. Luftreifen, der eine Karkasse und einen Seitenwandgummi umfasst,
wobei der Seitenwandgummi durch Laminieren von zwei oder mehr Lagen von Gummis geformt ist, die einen Seitenwand-Äußerstlagengummi an einer Reifenaußenfläche und einen Seitenwand-Innenlagengummi, der näher zu einer Reifeninnenfläche als der Seitenwand-Äußerstlagengummi ist, einschließen,
die Karkasse aus mindestens einer Karkassenschicht besteht, die jeweils einen Karkassenkord und einen Schichtüberzugsgummi, der den Karkassenkord überzieht, einschließt,
der Schichtüberzugsgummi einen spezifischen Durchgangswiderstand von 1 × 10¹⁰ Ω·cm oder mehr aufweist,
der Seitenwand-Äußerstlagengummi einen spezifischen Durchgangswiderstand von 1 × 10¹⁰ Ω·cm oder mehr aufweist,
der Seitenwand-Innenlagengummi einen spezifischen Durchgangswiderstand von 1 × 10⁷ Ω·cm oder weniger aufweist,
der Seitenwand-Innenlagengummi eine maximale Dicke von 0,1 mm oder mehr und 1,2 mm oder weniger aufweist,
ein Massenverhältnis eines Antioxidationsmittels in dem Seitenwand-Innenlagengummi 1,2 Masse-% oder mehr beträgt,
ein Verhältnis des Massenverhältnisses des Antioxidationsmittels in dem Seitenwand-Innenlagengummi zu einem Massenverhältnis eines Antioxidationsmittels in dem Seitenwand-Äußerstlagengummi, berechnet als (das Massenverhältnis des Antioxidationsmittels in dem Seitenwand-Innenlagengummi)/(das Massenverhältnis des Antioxidationsmittels in dem Seitenwand-Äußerstlagengummi), 0,7 oder mehr und 2,0 oder weniger beträgt, und
ein Verhältnis E'_{swout}/E'_{swin} eines Speichermoduls E'_{swout} des Seitenwand-Äußerstlagengummis bei einer dynamischen Dehnung von 1 % und 25 °C zu einem Speichermodul E'_{swin} des Seitenwand-Innenlagengummis bei einer dynamischen Dehnung von 1 % und 25 °C mehr als 0,57 und weniger als 1,5 beträgt, wobei der spezifische Durchgangswiderstand des Schichtüberzugsgummis, der spezifische Durchgangswiderstand des Seitenwand-Äußerstlagengummis und der spezifische Durchgangswiderstand des Seitenwand-Innenlagengummis nach dem Verfahren gemessen werden, wie in der Beschreibung offenbart, und wobei der Speichermodul E'_{swout} des Seitenwand-Äußerstlagengummis und der Speichermodul E'_{swin} des Seitenwand-Innenlagengummis nach dem Verfahren gemessen werden, wie in der Beschreibung offenbart.

2. Luftreifen nach Anspruch 1, wobei ein Verhältnis E'_{swin}/E'_{pc} von E'_{swin} zu einem Speichermodul E'_{pc} des Schichtüberzugsgummis bei einer dynamischen Dehnung von 1 % und 25 °C mehr als 0,5 und weniger als 1,0 beträgt.

3. Luftreifen nach Anspruch 2, wobei E'_{swout}, E'_{swin} und E'_{pc} eine Beziehung E' _{swout} < E'_{swin} < E'_{pc} erfüllen.

4. Luftreifen nach einem der Ansprüche 1 bis 3, wobei tanδ des Seitenwand-Äußerstlagengummis bei 25 °C weniger als 0,10 beträgt.

5. Luftreifen nach einem der Ansprüche 1 bis 4, wobei tanδ des Schichtüberzugsgummis bei 25 °C 0,20 oder weniger beträgt.

6. Luftreifen nach einem der Ansprüche 1 bis 5, wobei der Seitenwand-Innenlagengummi 10 Massenteile bis 80 Massenteile eines Rußes (I), der eine spezifische Stickstoffadsorptionsoberfläche von 25 m²/g oder mehr und 75 m²/g oder weniger in Bezug auf 100 Massenteile einer Gummikomponente aufweist, und 5 Massenteile bis 30 Massenteile eines Rußes (II), der eine spezifische Stickstoffadsorptionsoberfläche von mehr als 75 m²/g und 150 m²/g oder weniger in Bezug auf 100 Massenteile der Gummikomponente aufweist, enthält.

## Revendications

1. Pneumatique comprenant une carcasse et un caoutchouc de flanc,
dans lequel le caoutchouc de flanc est formé en stratifiant deux couches de caoutchoucs ou plus incluant un caoutchouc de couche la plus à l'extérieur du flanc sur une surface extérieure du pneu et un caoutchouc de couche intérieure de flanc plus proche d'une surface intérieure du pneu que le caoutchouc de couche la plus à l'extérieur du flanc,
la carcasse est composée d'au moins une nappe de carcasse incluant chacune un câblé de carcasse et un caoutchouc de revêtement de nappe recouvrant le câblé de carcasse,
le caoutchouc de revêtement de nappe a une résistivité volumique de 1 × 10¹⁰ Ω·cm ou plus,
le caoutchouc de la couche la plus à l'extérieur du flanc a une résistivité volumique de 1 × 10¹⁰ Ω·cm ou plus,
le caoutchouc de la couche intérieure de flanc a une résistivité volumique inférieure ou égale à 1 × 10⁷ Ω·cm,
le caoutchouc de la couche intérieure de flanc a une épaisseur maximale supérieure ou égale à 0,1 mm et inférieure ou égale à 1,2 mm,
un rapport de masse d'un anti-oxydant dans le caoutchouc de la couche intérieure de flanc est de 1,2 % en masse ou plus,
une proportion du rapport de masse de l'anti-oxydant dans le caoutchouc de la couche intérieure de flanc sur un rapport de masse d'un anti-oxydant dans le caoutchouc de la couche la plus à l'extérieur du flanc, calculée comme (le rapport de masse de l'anti-oxydant dans le caoutchouc de la couche intérieure de flanc) / (le rapport de masse de l'anti-oxydant dans le caoutchouc de la couche la plus à l'extérieur du flanc), est égal ou supérieur à 0,7 et inférieur ou égal à 2,0, et
une proportion E'_{swout} / E'_{swin} d'un module de conservation E'_{swout} du caoutchouc de la couche la plus à l'extérieur du flanc à un allongement dynamique de 1 % et à 25 °C à un module de conservation E'_{swin} du caoutchouc de la couche intérieure de flanc à un allongement dynamique de 1 % et à 25 °C est supérieur à 0,57 et inférieur à 1,5, dans lequel la résistivité volumique du caoutchouc de revêtement de nappe, la résistivité volumique du caoutchouc de la couche la plus à l'extérieur du flanc et la résistivité volumique du caoutchouc de la couche intérieure de flanc sont mesurées selon le procédé divulgué dans la description, et dans lequel le module de conservation E'_{swout} du caoutchouc de la couche la plus à l'extérieur du flanc et le module de conservation E'_{swin} du caoutchouc de la couche intérieure de flanc sont mesurés selon le procédé divulgué dans la description.

2. Pneumatique selon la revendication 1, dans lequel une proportion E'_{swin} / E'_{pc} de E'_{swin} sur un module de conservation E_{pc} du caoutchouc de revêtement de nappe à un allongement dynamique de 1 % et à 25 °C est supérieure à 0,5 et inférieure à 1,0.

3. Pneumatique selon la revendication 2, dans lequel E'_{swout}, E'_{swin} et E'_{pc} satisfont à une relation E'_{swout} < E'_{swin} < E'_{pc}.

4. Pneumatique selon l'une quelconque des revendications 1 à 3, dans lequel la tanδ du caoutchouc de la couche la plus à l'extérieur du flanc à 25 °C est inférieure à 0,10.

5. Pneumatique selon l'une quelconque des revendications 1 à 4, dans lequel la tanδ du caoutchouc du revêtement de nappe à 25 °C est inférieure ou égale à 0,20.

6. Pneumatique selon l'une quelconque des revendications 1 à 5, dans lequel le caoutchouc de la couche intérieure de flanc contient 10 parties à 80 parties en masse d'un noir de carbone (I) ayant une surface spécifique d'adsorption d'azote supérieure ou égale à 25 m²/g et inférieure ou égale à 75 m²/g rapportées à 100 parties en masse d'une composante de caoutchouc, et de 5 parties en masse à 30 parties en masse d'un noir de carbone (II) ayant une surface spécifique d'adsorption d'azote supérieure à 75 m²/g et inférieure ou égale à 150 m²/g rapportées à 100 parties en masse de la composante de caoutchouc.
